## Europäisches Patentamt

## European Patent Office

## Office européen des brevets

(11) Veröffentlichungsnummer: **0 118 009**
**B1**

# EUROPÄISCHE PATENTSCHRIFT

(45) Veröffentlichungstag der Patentschrift:
27.04.88

(51) Int. Cl.⁴: **C 09 D 3/80,** C 04 B 41/46,
C 04 B 26/06

(21) Anmeldenummer: **84100852.7**

(22) Anmeldetag: **27.01.84**

(54) **Verwendung einer wässrigen Poly(meth)acrylat-Sekundärdispersion als verdickendes Bindemittel für Buntsteinputz.**

(30) Priorität: **05.02.83 DE 3303930**

(43) Veröffentlichungstag der Anmeldung:
**12.09.84 Patentblatt 84/37**

(45) Bekanntmachung des Hinweises auf die Patenterteilung:
**27.04.88 Patentblatt 88/17**

(84) Benannte Vertragsstaaten:
**AT BE CH DE FR GB IT LI NL SE**

(56) Entgegenhaltungen:
**EP-A-0 022 982**
**EP-A-0 043 911**
**FR-A-2 202 136**
**US-A-3 753 769**
**US-A-3 970 633**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Dersch, Rolf, Dr., Albrecht- Duerer- Ring 16, D-6710 Frankenthal (DE)**
Erfinder: **Loch, Werner, Dr., In der Bleiche 2, D-6701 Erpolzheim (DE)**
Erfinder: **Matthaei, Lothar, Am Westring, D-6714 Weisenheim (DE)**
Erfinder: **Schultze, Wolfgang, Schuetzenweg 4a, D-6710 Frankenthal (DE)**
Erfinder: **Wistuba, Eckehardt, Dr., Im Obergarten 7, D-6702 Bad Duerkheim (DE)**

LIBER, STOCKHOLM 1988

**Beschreibung**

Die vorliegende Erfindung betrifft die Verwendung einer emulgatorfreien wäßrigen Copolymerisatdispersion als Bindemittel für wäßrige Buntsteinputze, welche aufgrund ihrer verdickenden Wirkung den Einsatz hydrophiler Verdicker unnötig macht und zu besonders wasserfesten Beschichtungen führt.

Buntsteinputze sind Beschichtungsstoffe, die aus Bindemitteln, Lösungs- und/oder Dispergiermitteln, Verdickern, Steingranulaten und weiteren Hilfsstoffen, z. B. Entschäumern, bestehen und zur Beschichtung mineralischer Untergründe, z. B. von Hauswänden, -sockeln und Treppenhauswänden, geeignet sind.

Als Bindemittel für Buntsteinputze werden Polymerisate auf Basis von (Meth)acrylsäureestern eingesetzt, die bei lösungsmittelhaltigen Putzen durch Perl-, Substanz- und Lösungspolymerisation hergestellt werden. Bei den wäßrigen Buntsteinputzen gelangen in Wasser dispergierte Polymerisate zum Einsatz. Sie werden durch Emulsionspolymerisation hergestellt.

Von den Buntsteinputzen wird verlangt, daß sie gut verarbeitbar sind, nach der Applikation möglichst schnell wasserfest werden, im getrockneten Zustand bei Wassereinwirkung nicht weiß anlaufen und zudem brillante, vergilbungs- und kreidungsbeständige Beschichtungen ergeben.

Sie sollen außerdem gut verarbeitbar sein, d.h. gute Naßhaftung auf dem Untergrund zeigen. Weiterhin dürfen die Steingranulate an der senkrechten Wand nicht abrutschen.

Die Naßhaftung und das Verhindern des Abrutschens des Steingranulats wird durch Einarbeitung von wasserlöslichen Verdickern, wie hochmolekularen Polyacrylsäuresalzen und hochmolekularen Celluloseethern in die Polymerdispersionen erreicht, die aufgrund ihrer Viskosität den Putzen innere Festigkeit geben.

Der Einsatz der hydrophilen Verdicker wirkt sich jedoch auf die Wasserfestigkeit der Putze nachteilig aus, so daß frisch aufgetragene Putze manchmal durch Regen abgewaschen werden, und angetrocknete Putze unter der Einwirkung von Wasser, d.h. von Regen, weiß anlaufen. Durch dieses Weißanlaufen verliert der Putz seine Brillanz, er vergraut. Darüber hinaus quellen die als Verdicker eingesetzten hydrophilen Substanzen den Film; die Folge sind Haftverluste und Abblättern der Putze.

Aus der europäischen Patentanmeldung 0 043 911, insbesondere Beispiel 5, 3 ist eine Masse zum Verputzen von Mauerwerk bekannt, bei der es sich um einen hochpigmentierten kunststoffgebundenen Putz handelt. Als Bindemittel enthält diese Masse eine Lösung eines Copolymerisats aus 73,5 % Isobutylmethacrylat, 20 % Ethylhexylacrylat und 7 % Acrylsäure, die mit wäßrigem Ammoniak zersetzt ist. Die Masse enthält zudem einen Zusatz an einer verdickend wirkenden wäßrigen Paste von Montmorillonit. Kunststeinputze werden in der europäischen Patentanmeldung 0 043 911 nicht erwähnt.

Analog den hydrophilen Verdickern wirken die Emulgatoren und/oder Schutzkolloide, die als Hilfsstoffe bei der Herstellung von Polymerdispersionen, die üblicherweise als Bindemittel für die wäßrigen Buntsteinputze eingesetzt werden, zugegen sind.

Der vorliegenden Erfindung lag nun die Aufgabe zugrunde, ein verdickendes Bindemittel für Buntsteinputze, das frei von den oben genannten Nachteilen ist, zur Verfügung zu stellen.

Gegenstand der vorliegenden Erfindung ist die Verwendung einer wäßrigen Dispersion eines durch Substanz- oder Lösungspolymerisation hergestellten Copolymerisates aus:

a) 20 bis 40 Gew.-% Methacrylsäureestern von $C_1$- bis $C_4$-Alkoholen,

b) 40 bis 80 Gew.-% Acrylsäureestern von $C_1$- bis $C_8$-Alkoholen,

c) 2 bis 12 Gew.-% (Meth)acrylsäure,

d) 0 bis 20 Gew.-% anderen carboxylgruppenfreien copolymerisierbaren monoolefinisch ungesättigten Verbindungen, die nicht unter a bis c genannt sind, und

e) 0 bis 3 Gew.-% Verbindungen mit minestens zwei copolymerisierbaren Doppelbindungen,

wobei die Summe der Mengen der Komponenten (a) bis (e) gleich 100 % ist, der K-Wert nach DIN 53726 18 bis 50 beträgt und die Carboxylgruppen ganz oder teilweise mit Ammoniak neutralisiert sind, als verdickendes Bindemittel für Buntsteinputze.

Mit den erfindungsgemäß zu vervendenden Copolymerisat-Dispersionen lassen sich Buntsteinputze herstellen, die auch ohne die üblichen Verdicker, also Polyacrylsäuresalze und/oder ohne Celluloseether, die gewünschten Verarbeitungseigenschaften aufweisen, d.h. im frisch aufgetragenen Zustand weitgehend wasserfest sind, in getrocknetem Zustand bei Wassereinwirkung nicht weiß anlaufen und darüber hinaus brillante, vergilbungsund kreidungsbeständige Beschichtungen mit extrem geringer Wasseraufnahme und sehr guter Haftung auf mineralischen Untergründen ergeben.

Für die Copolymerisate eignen sich (a) als Methacrylsäureester der Methyl-, Ethyl-, Propyl-, Isopropyl-, n-Butyl-, Isobutyl- und tert.-Butylester die in einer Menge von 20 - 40, vorzugsweise 25 - 35 Gew.-%, einpolymerisiert sind. Bevorzugt wird Methylmethacrylat eingesetzt.

Als Acrylsäureester (b) eignen sich die Ester der $C_1$-$C_8$- Alkanole, wie Methyl-, Ethyl-, n-Butyl-, Isobutyl-, tert.-Butyl, 2-Ethylhexyl- und Cyclohexylacrylat. Bevorzugt werden die isomeren Butylacrylate eingesetzt. Komponente (b) ist im erfindungsgemäßen Copolymerisat in Mengen von 40-80, vorzugsweise 50 - 70 Gew.-%, einpolymerisiert.

Die Komponente (c), nämlich Acryl- und/oder Methacrylsäure ist in Mengen von 2 - 12, vorzugsweise 2,5 - 7 Gew.-%, einpolymerisiert, und:

bei der Komponenten (d) handelt es sich um weitere monoolefinisch ungesättigte Verbindungen, die nicht unter (a) bis (c) genannt sind, und die gegebenenfalls in Mengen bis zu 20 Gew.-% im Copolymerisat einpolymerisiert sein können. Genannt seien beispielsweise Styrol, Mono(meth)-acrylate von Alkandiolen, wie

2

Hydroxyethylacrylat und Methacrylat, Acryl- und Methacrylamid, Acryl- und Methacrylnitril und/oder Vinylester, wie Vinylacetat, Vinylpropionat und Vinyliso-Valeriansäureester.

Als Komponente (e) können schließlich Verbindungen mit mindestens zwei polymerisierbaren Doppelbindungen, wie sie z. B. in Divinylbenzol, Divinyldioxan und besonders Di(meth)acrylaten von Alkandiolen, wie Butandioldiacrylat enthalten sind, dienen. Komponente (e) kann in Mengen von 0 - 3 Gew.-% einpolymerisiert werden.

Die Summe der Mengen der Komponenten (a) bis (e) ist 100 %.

Das Copolymerisat weist einen K-Wert (gemessen nach DIN 53726, 3 %-ige Lösung in Aceton) von 18 - 50, vorzugsweise 25 - 40, und meist eine Säurezahl von 15,4 bis 92,4, vorzugsweise von 23 bis 54, auf.

Die Herstellung des in der erfindungsgemäß zu verwendenden Dispersion enthaltenen Copolymerisates kann in an sich üblicher Weise durch Substanz- oder Lösungspolymerisation erfolgen.

Die Copolymerisate werden vor ihrem Einsatz als Bindemittel für Buntsteinputze in wäßrige Dispersionen überführt. Zu diesem Zweck kann ein entsprechendes Substanzpolymerisat in einem organischen Lösungsmittel gelöst bzw. die Lösung eines entsprechenden Lösungspolymerisats direkt eingesetzt werden. Die Herstellung kann z. B. gemäß DE-OS-2 507 842 erfolgen, indem man die lösung eines Lösungscopolymerisats in einem mit Wasser wenig mischbaren Lösungsmittel, wie Butanol, unter Rühren mit Wasser mischt und das organische Lösungsmittel gegebenenfalls gleichzeitig abdestilliert. Als Neutralisationsmittel dient dabei Ammoniak.

Der Festgehalt der erfindungsgemäß zu verwendenden Copolymerisat-Dispersion beträgt meist 15 - 45, bevorzugt 25 - 40 Gew.-%, der pH-Wert liegt im allgemeinen bei 4 bis 8, oft bei 4 bis 6,5.

Die erfindungsgemäß zu verwendenden Copolymerisat-Dispersionen können als alleinige Bindemittel zur Herstellung von Buntsteinputzen angewandt werden, ihr Amteil an den Buntsteinputzen liegt im allgemeinen zwischen 10 und 35 Gew.-% an Copolymerisat, bezogen auf den Putz, vorzugsweise zwischen 15 und 25 Gew.-%. Sie können auch mit anderen durch Emulsionspolymerisation hergestellten Dispersionen kombiniert werden, wie z. B. wäßrigen Poly(meth)acrylatdispersionen, beispielsweise um die Eigenschaften der bekannten Buntsteinputze abzuwandeln.

Zur Herstellung der Buntsteinputze können die erfindungsgemäßen Bindemittel im allgemeinen mit weiterem Ammoniak auf pH 7 - 9,5, bevorzugt 7,8 - 8,5, eingestellt und, bezogen auf das Polymerisat mit 2 - 25 Gew.-%, bevorzugt 3-20 Gew.-%, eines Glykolethers, wie Butylglykol, Propylpropylenglykol und/oder eines Esters, wie Butylacetat und/oder Kohlenwasserstoffen, wie Benzin, versetzt werden.

Die in den Beispielen angegebenen Teile bzw. Prozente beziehen sich auf das Gewicht.

## Beispiel

(a) Herstellung der Copolymerisat-Dispersion

In einem Reaktionsgefäß mit Rührer, Kühler und zwei Zulaufgefäßen werden unter Stickstoff 200 Teile von Zulauf 1, der aus 300 Teilen Methylmethacrylat, 655 Teilen iso- Butylacrylat und 45 Teilen Acrylsäure besteht, und 100 Teile Xylol vorgelegt. Die Vorlage wird auf 100°C aufgeheizt. Beim Erreichen dieser Temperatur werden 10 % von Zulauf 2, der aus 12 Teilen tert.-Butylperbenzoat und 100 Teilen Xylol besteht, zugegeben und 10 Min. polymerisiert, wobei die Temperatur auf 129°C ansteigt. Bei einer Temperatur von 130 - 135°C werden der Rest von Zulauf 1 innerhalb von 2,0 Stunden und der Rest von Zulauf 2 innerhalb von 2,5 Stunden gleichmäßig zugetropft. Bei 135°C wird 2 Stunden nachpolymerisiert und anschließend im Vakuum das Xylol und Restmonomere abdestilliert. Beim Abkühlen der Harzschmelze werden 540 Teile iso-Butanol zugegeben.

Dann werden bei Raumtemperatur 42,5 Teile 25 %-ige wäßrige Ammoniaklösung in die Harzlösung eingerührt und weitere 2,5 Stunden gerührt. Anschließend werden 300 Teile destilliertes Wasser eingerührt. Unter kontinuierlicher Zugabe von 1 600 Teilen Wasser während einer Zeit von etwa 2 Stunden werden bei 40 - 50°C und 100 mbar das Lösungsmittel und ein Teil des Wassers abdestilliert. Die Kennzahlen der Copolymerisat-Dispersion (a) sind in Tabelle 1 zusammengestellt.

**Tabelle 1:** Kennzahlen der Copolymerisat-Dispersion:

| | |
|---|---|
| Festgehalt (Gew.-%): | 44,8 |
| Neutralisationsgrad (%): | 65,4 |
| K-Wert: | 32,4 |
| Wasseraufnahme des Polymerfilms nach 48 Std. (%): | 2,7 |

(b) Herstellung eines Buntsteinputzes auf Basis der Copolymerisat-Dispersion

In 180 Teilen Copolymerisat-Dispersion (a) werden unter Rühren 125 Teile Wasser, 4 Teile Ammoniak (25 %-ig), 15 Teile Butylglykol und 633 Teile Granulat (Kerolit Ko und KOO 1 : 1) eingerührt. Nach 24 Stunden Lagerung bei Raumtemperatur wird die Verarbeitbarkeit geprüft. Die mit dem Buntsteinputz (b) erhaltenen Prüfergebnisse sind in Tabelle 2 zusammengestellt.

(c) Herstellung eines Buntsteinputzes auf Basis einer Mischung der Copolymerisat-Dispersion (a) und einer wäßrigen Poly(meth)acrylsäureester-Dispersion

Unter Rühren werden zu einem Gemisch aus 81 Teilen einer 50 %-igen wäßrigen Dispersion eines Copolymerisats aus gleichen Teilen Methylmethacrylat, n-Butylacrylat und 90,3 Teilen Copolymerisat-Dispersion (a) 2,5 Teile 25 %-iger Ammoniak, 15 Teile Butylglykol, 110 Teile Wasser und 633 Teile Granulat (Kerolit KO und KOO 1 : 1) gegeben. Nach einer Lagerung von 24 Stunden bei Raumtemperatur werden die in Tabelle 2 zusammengestellten Prüfergebnisse erhalten.

(d) Vergleichsbeispiel

Unter Rühren werden 12 g Testbenzin (180 - 210°), 162 g Poly(meth)acrylsäureesterdispersion, 50 %-ig bestehend aus 50 Gew.-% Methylmethacrylat und 50 Gew.-% Butylacrylat, 36 g 2 %-iger Celluloseetherlösung (MG 200.000), 128 g 1 %-iger Polyacrylsäuresalzlösung und 633 g (Kerolit KO und K00 1:1) vereinigt. Nach 24 Stunden Reifezeit erfolgt die Verarbeitung. Prüfergebnisse siehe Tabelle 2.

**Tabelle 2:** Prüfergebnisse der Buntsteinputze

| Buntsteinputz | (b) | (c) | (d)-Vergleich |
|---|---|---|---|
| Weißanlaufen nach 24 stündiger Trocknung in min | 25 | 18 | 9 |
| Verarbeitbarkeit | gut | gut | gut |
| Lagerstabilität nach 1 Woche | gut | befriedigend | befriedigend |

**Patentansprüche**

1. Verwendung einer wäßrigen Sekundär-Dispersion eines durch Substanz- oder Lösungspolymerisation hergestellten Copolymerisates aus:
a) 20 - 40 Gew.-% Methacrylsäureestern von $C_1$-$C_4$-Alkanolen,
b) 40 - 80 Gew.-% Acrylsäureestern von $C_1$-$C_8$-Alkanolen,
c) 2 - 12 Gew.-% (Meth)-acrylsäure,
d) 0 - 20 Gew.-% anderen carboxylgruppenfreien copolymerisierbaren monoolefinisch ungesättigten Verbindungen, die nicht unter a - c genannt sind, und
e) 0 - 3 Gew.-% Verbindungen mit mindestens zwei copolymerisierbaren Doppelbindungen,
wobei die Summe der unter a) - e) genannten Prozentzahlen gleich 100 ist, der K-Wert nach DIN 53726 18 - 50 beträgt und die Carboxylgruppen ganz oder teilweise mit Ammoniak neutralisiert sind, als verdickendes Bindemittel für Buntsteinputze.
2. Verwendung nach Anspruch 1 in Kombination mit wäßrigen Polymerdispersionen, die durch Emulsionspolymerisation hergestellt sind.

**Claims**

1. Use of an aqueous secondary dispersion of a copolymer which is prepared by polymerization in the presence or absence of a solvent and consists of:
a) from 20 to 40 % by weight of esters of methacrylic acid with $C_1$-$C_4$-alkanols,
b) from 40 to 80 % by weight of esters of acrylic acid with $C_1$-$C_8$-alkanols,
c) from 2 to 12 % by weight of (meth)acrylic acid,
d) from 0 to 20 % by weight of other carboxyl-free, copolymerizable monoolefinically, unsaturated compounds not mentioned under a), b) or c), and
e) from 0 to 3 % by weight of compounds having two or more copolymerizable double bonds,
the sum of the percentages stated under a) to e) being 100, the K value according to DIN 53.726 being from 18 to 50, and some or all of the carboxyl groups being neutralized with ammonia, as a thickening binder for stone chip renders.
2. Use as claimed in claim 1 in combination with an aqueous polymer dispersion prepared by emulsion polymerization.

## 0 118 009

**Revendications**

1. Utilisation d'une dispersion aqueuse secondaire d'un copolymère préparé par une polymérisation en substance ou en solution et composé de:

a) 20 à 40 % en poids de méthacrylates d'alcanols en $C_1$ à $C_8$,

b) 40 à 80 % en poids d'acrylates d'alcanols en $C_1$ à $C_8$,

c) 2 à 12 % en poids d'acide (méth)acrylique,

d) 0 à 20 % en poids de composés à insaturation monooléfinique copolymérisables, exempts de groupes carboxyle, autres que ceux mentionnés sub a) à c), et

e) 0 à 3 % en poids de composés avec au moins deux doubles liaisons copolymérisables

- la somme des pourcentages de a) à e) étant égale à 100 -, possédant une valeur K selon la norme DIN 53 726 comprise entre 18 et 50 et dont les groupes carboxyle sont complètement ou partiellement neutralisés par de l'ammoniac, comme liant épaississant pour des plâtres colorés.

2. Utilisation suivant la revendication 1 en combinaison avec des dispersions aqueuses de polymères préparés par une polymérisation en émulsion.